# EUROPÄISCHE PATENTSCHRIFT

(11) **EP 4 051 004 B1**
(45) Veröffentlichungstag und Bekanntmachung des Hinweises auf die Patenterteilung: **08.11.2023**
(21) Anmeldenummer: 21729286.1
(22) Anmeldetag: 26.05.2021
(51) Int. Cl.: A01N 59/16, A01N 59/00, A01N 25/26, A01N 25/08, A01P 1/00, C09D 5/14, C09D 7/62

(54) **PARTIKULÄRES ANTIMIKROBIELLES HYBRIDSYSTEM**
PARTICULATE ANTIMICROBIAL HYBRID SYSTEM
SYSTÈME HYBRIDE ANTIMICROBIEN PARTICULAIRE

(30) Priorität: 26.05.2020 EP 20176476; 05.08.2020 EP 20189686; 11.09.2020 EP 20195711
(43) Veröffentlichungstag der Anmeldung: 07.09.2022
(60) Teilanmeldung: 23195931.3
(73) Patentinhaber: AGXX Intellectual Property Holding GmbH, 14195 Berlin (DE)
(72) Erfinder: LANDAU, Uwe, 14169 Berlin (DE); MEYER, Carsten, 10589 Berlin (DE); WAGNER, Olaf, 12163 Berlin (DE)
(74) Vertreter: Remus, Alvaro Johannes
(86) Internationale Anmeldenummer: PCT/EP2021/064115
(87) Internationale Veröffentlichungsnummer: WO 2021/239845

(56) Entgegenhaltungen:
- EP-A1- 2 716 605
- EP-A1- 2 949 325
- DE-A1-102006 049 108
- DE-A1-102012 218 233
- Uwe Landau: "AGXX - Eine nachhaltige Lösung für die Entkeimung wässriger Lösungen", Galvanotechnik, 1. November 2013 (2013-11-01), Seiten 2169-2184, XP055738114, Germany Gefunden im Internet: URL:https://www.edelhoff-wire.de/fileadmin /Infocenter/ae-aqua-galvanotechnik-11.2013 .pdf [gefunden am 2020-10-08]
- EMANUEL CLAUSS-LENDZIAN ET AL: "Stress response of a clinical Enterococcus faecalis isolate subjected to a novel antimicrobial surface coating", MICROBIOLOGICAL RESEARCH, Bd. 207, 1. März 2018 (2018-03-01), Seiten 53-64, XP055738112, DE ISSN: 0944-5013, DOI: 10.1016/j.micres.2017.11.006
- A. GURIDI ET AL: "New antimicrobial contact catalyst killing antibiotic resistant clinical and waterborne pathogens", MATERIALS SCIENCE AND ENGINEERING C, Bd. 50, 1. Mai 2015 (2015-05-01), Seiten 1-11, XP055738110, CH ISSN: 0928-4931, DOI: 10.1016/j.msec.2015.01.080
- X Wu ET AL: "Characterization of silica-supported Ru-Ag and Ru-Au bimetallic catalysts by hydrogen chemisorption and nmr of adsorbed hydrogen", Journal of catalysis, 1. Januar 1990 (1990-01-01), Seiten 43-59, XP055767644, Amsterdam DOI: 10.1016/0021-9517(90)90156-E Gefunden im Internet: URL:https://doi.org/10.1016/0021-9517(90)9 0156-E
- QIAOQIAO YIN ET AL: "Plasmonic molybdenum oxide nanosheets supported silver nanocubes for enhanced near-infrared antibacterial activity: Synergism of photothermal effect, silver release and photocatalytic reactions", APPLIED CATALYSIS B: ENVIRONMENTAL, Bd. 224, 1. Mai 2018 (2018-05-01), Seiten 671-680, XP055737944, AMSTERDAM, NL ISSN: 0926-3373, DOI: 10.1016/j.apcatb.2017.11.024
- ZHANG XUE-GANG ET AL: "Constructing magnetic and high-efficiency AgI/CuFe2O4 photocatalysts for inactivation of Escherichia coli and Staphylococcus aureus under visible light: Inactivation performance and mechanism analysis", SCIENCE OF THE TOTAL ENVIRONMENT, Bd. 668, 6. März 2019 (2019-03-06), Seiten 730-742, XP085645567, ISSN: 0048-9697, DOI: 10.1016/J.SCITOTENV.2019.03.068
- ALEXANDER HEISS ET AL: "Enhanced antibacterial activity of silver-ruthenium coated hollow microparticles", BIOINTERPHASES, Bd. 12, Nr. 5, 1. Dezember 2017 (2017-12-01), Seite 05G608, XP055767777, US ISSN: 1934-8630, DOI: 10.1116/1.5003803

## Beschreibung

Die Erfindung betrifft ein Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens zwei unterschiedliche Metalle umfassen, wobei zumindest ein erstes Metall und ein zweites Metall zumindest mit ihren jeweiligen Oberflächen miteinander in elektrisch leitendem Kontakt stehen, und wobei das erste Metall mindestens eine halbleitende Verbindung mindestens eines Übergangsmetallelements umfasst, das über mehrere Oxidationsstufen verfügt und über katalytisch aktive Zentren einen Wechsel der Oxidationsstufen erlaubt, und das zweite Metall mindestens einen elektrisch leitfähigen Silberhalbleiter umfasst, wobei die beiden Metalle Halbelemente bilden, die in Gegenwart von Wasser und Sauerstoff kurzgeschlossen sind und dadurch eine antimikrobielle, antivirale und/oder fungizide Wirkung entfalten.

Additive müssen i.d.R. eine Reihe von Eigenschaften besitzen, die basierend auf einem Grundwerkstoff alleine häufig nicht erreicht werden können. Mittels Oberflächentechnik können gewünschte Eigenschaftsprofile eingestellt werden. Häufig werden dabei Eigenschaften benötigt, die nicht durch ein Material allein, sondern nur durch mehrere Oberflächenmaterialien, bestehend aus unterschiedlichen Komponenten, erreicht werden können. Solche Mehrkomponentensysteme werden auch als hybride Werkstoff- bzw. Materialsysteme bezeichnet.

Antimikrobiell ausgestattete Vorrichtungen bzw. Produkte werden in sensiblen Bereichen, z. B. in der Medizin- und Hygienetechnik oder Lebensmittelverarbeitung bereits seit längerem eingesetzt. Die aktuelle SARS-CoV-2 Pandemie, aber auch viele vorausgegangene Epidemien haben das Thema Hygiene und Schutz vor pathogenen Mikroorganismen ganz weit in das Bewusstsein der Bevölkerung gerückt und das antimikrobielle Schutzbedürfnis auf alle Lebensbereiche ausgeweitet. Die aktuelle Situation macht aufgrund der gewaltigen negativen Auswirkungen auf die Weltwirtschaft deutlich, welche Bedeutung antimikrobieller Schutz besitzt und dass der Bedarf an hochwirksamen antimikrobiellen Schutzmaterialien erheblich steigen wird. Gerade für Gegenstände, die vielfach berührt werden oder als antimikrobielle Schutzausrüstungen, wie z.B. Mundschutzmasken, dienen, werden zunehmend leistungsfähigere und langlebigere antimikrobielle Systeme benötigt, die gut verarbeitet und in Produkte integriert werden können.

### Stand der Technik

Bisherige Lösungen im Bereich der antimikrobiell wirksamen Additive beschränken sich auf den Einsatz von herkömmlichen bioziden Substanzen, die durch Auslaugen freigesetzt werden. Hierbei werden oligodynamische Metalle wie Silber, Kupfer oder Zink, deren chemische Modifikationen, organische Substanzen wie Triclosan und Isothiazolinone sowie metallorganische Substanzen wie Zinkpyrithion eingesetzt. Diese Substanzen werden in einem Depot in die Trägermatrix eingelagert. Ist das Depot erschöpft, so ist die antimikrobielle Wirkung des Trägermaterials nicht mehr gegeben. Neue Entwicklungen auf dem Gebiet der antimikrobiell wirksamen Zusätze beziehen sich meist auf die Herstellung von Partikeln für die Pulverbeschichtung, auf eine verbesserte Dispergierung von Bioziden in einer polymeren Trägermatrix, auf die Vermeidung von Verfärbungen der Trägermatrix durch die beigemengten Biozide sowie auf die kontrollierte Freisetzung der bioziden Wirkstoffe durch Verkapselung. Von zukunftsfähigen antimikrobiellen Systemen wird aber erwartet, dass sie eine ausreichende spontane Wirkung entfalten, um das Wachstum von Mikroorganismen zu verhindern und gleichzeitig über lange Zeiträume hinweg durch langsames Freisetzen toxikologisch und ökotoxikologisch verträglicher Mengen der Wirksubstanz antimikrobiell wirksam sind.

Aus der WO 2008/046513 A2 ist eine bioaktive, Silber, Ruthenium und ein Vitamin enthaltende metallische Beschichtung bekannt, die zur Entkeimung, Desinfektion und Dekontamination von Wasser oder wässrigen Lösungen verwendet wird. Die Kombination von Silber mit Ruthenium und einem Vitamin, beispielsweise Ascorbinsäure, führt zu einer schnelleren und effizienteren Abtötung von Mikroorganismen. Gleichzeitig verhindern diese bioaktiven Metalloberflächen die Besiedelung mit Mikroorganismen und die Anheftung oder stabile Ablagerung von problematischen Biomolekülen wie zum Beispiel DNA, RNA oder Proteinen. Durch die Beschichtung entsteht eine sich selbst reinigende Oberfläche, die bei Kontakt mit Wasser oder wässrigen Lösungen sehr schnell und effizient dessen Keimfreiheit herstellt und über längere Zeiträume aufrechterhält.

Das Patent EP 0 677 989 B1 offenbart die Herstellung eines antimikrobiell wirksamen Pulvers, das als Zusatz für Produkte aus Kunststoff verwendet werden kann. Das Pulver besteht aus einem Kern aus anorganischem Material, das mit einem antimikrobiell wirksamen Metall oder einer solchen Metallverbindung beschichtet ist. Eine zweite Beschichtung besteht aus Aluminiumsilikat, Aluminiumoxid, Aluminiumphosphat, Kieselsäure, Silikat, Borosilikat oder aus Mischungen dieser Substanzen. Durch die Porosität der Beschichtung soll die Diffusion antimikrobiell wirksamer Substanzen reguliert werden, so dass eine mögliche Verfärbung der verwendeten Kunststoffe verhindert wird. Eine dritte Beschichtung aus wasserhaltigen Metalloxiden von Aluminium, Magnesium, Zirkonium oder der Seltenen Erden soll die Agglomeration der Partikel reduzieren und deren Dispergierung in den Kunststoffen verbessern. Der Gehalt der antimikrobiellen Beschichtung beträgt 0,05 bis 20 Gew.-% bezogen auf das Trägermaterial. Für die zweite Beschichtung liegt der Gehalt bei 0,5 bis 20 Gew.-%, ebenfalls bezogen auf das Trägermaterial. Das antimikrobiell wirksame Pulver kann einer Vielzahl an aliphatischen oder aromatischen Polymeren beigemengt werden.

Die EP 0 270 129 A2 offenbart ein Verfahren zur Herstellung eines antimikrobiell wirksamen Pulvers auf Basis von Zeolithen sowie dessen Verwendung als Additiv für Harze. Es werden dabei sowohl natürliche als auch synthetische Zeolithe verwendet. Die antimikrobielle Funktion beruht auf dem vollständigen Austausch mit Ammoniumionen sowie mit Ionen der Metalle Silber, Kupfer, Zink, Quecksilber, Zinn, Blei, Bismut, Cadmium, Chrom und Thallium. Der Metallgehalt beträgt für Silber 0,1 bis 15 Gew.-% und für Kupfer oder Zink 0,1 bis 8 Gew.-%.

Das antimikrobiell wirksame Zeolith wird Harzen wie Polyethylen, Polypropylen, Polystyrol oder PVC beigemengt.

Das Patent US 5 147 686 offenbart die Herstellung antimikrobiell wirksamer Pulver unter Verwendung von pulverförmigem Titanoxid als Trägermaterial. Die Pulverpartikel besitzen eine Größe von 0,01 *µm* - 3 *µm.* Die Partikel werden mit einer antimikrobiell wirksamen Beschichtung versehen. Die Beschichtung besteht aus Kupfer, Zink sowie deren Legierungen wie Cu-Zn, Cu-Ag, Cu-Sn, Cu-Al, Zn-Sn, Zn-Sn-Cu, Zn-Al-Cu-Mg oder ähnlichen Legierungen. Der Metallgehalt beträgt 0,001 bis 35 Gew.-%. Die Beschichtung erfolgt durch außenstromlose Abscheidung, wobei die Oberfläche der Trägerpartikel zunächst mit Palladium oder Zinn aktiviert wird. Das Pulver zeichnet sich neben seinen antimikrobiellen Eigenschaften als Additiv in verschiedenen Medien aus.

Die US 2016/0369405 A1 offenbart ein Verfahren zur Herstellung von mit Metall beschichteten Partikeln in einer Flüssigkeit. Als Basispartikel dienen Partikel aus Silikon, Zinn, Germanium, Gallium, Blei, Zink, Aluminium oder Carbon, die in einem Reaktor mit einem Metall beschichtet werden, wobei es sich bei dem Metall um elementares Silber, Kupfer, Platin, Palladium, Eisen, Kobalt, Rhodium, Nickel, Vanadium, Ruthenium, Iridium oder Gold handelt. Zur Einleitung der Beschichtungsreaktion wird ein Reduktionsmittel, beispielsweise Ascorbinsäure, eingesetzt. Insbesondere wird die Herstellung und Verwendung von mit Silber beschichteten Silikonpartikeln beschrieben.

Die EP 2 949 325 A1 offenbart die Verwendung einer antimikrobiellen Zusammensetzung, welche metallisches Silber und metallisches Ruthenium sowie mindestens ein Vitamin oder mindestens ein Derivat eines Vitamins umfasst, zur topischen Behandlung oder Vermeidung von Erkrankungen der Haut, Hautanhangsgebilde oder Schleimhaut, die durch die Infektion mit mindestens einem Mikroorganismus verursacht werden. Offenbart sind ferner ein Verbandmaterial und ein Wundschnellverband, die eine antimikrobielle Zusammensetzung umfasst, welche metallisches Silber und metallisches Ruthenium sowie mindestens ein Vitamin oder mindestens ein Derivat eines Vitamins umfasst.

Die DE 10 2012 218 233 A1 offenbart eine kosmetische Stiftzusammensetzung, die als Gel auf der Basis eines Fettsäuresalzes, d. h., einer Seife, vorliegt und mindestens eine C-C-Alkancarbonsäure, mindestens ein Neutralisierungsmittel für die C-C-Alkancarbonsäure, mindestens 35 Gew.-% eines wasserlöslichen mehrwertigen C-C-Alkanols mit 2-6 Hydroxylgruppen und/oder mindestens eines wasserlöslichen Polyethylenglycols mit 3-20 Ethylenoxid-Einheiten, 20-60 Gew.-% Wasser und mindestens einen Partikel mit einer silberhaltigen Oberfläche, die anteilsweise mit Ruthenium beschichtet oder dotiert ist, enthält.

Guridi et al. (New antimicrobial contact catalyst killing antibiotic resistant clinical and waterborne pathogens, Materials Science and Engineering C 50 (2015) 1-11) beschreiben eine bioaktive Beschichtung bestehend aus einer metallischen Silberschicht und einer metallischen Rutheniumschicht, die mit einem Vitaminderivat konditioniert wurde. Sie postulieren den folgenden Mechanismus für die antimikrobielle Aktivität der Beschichtung: Mikrogalvanische Elemente auf der Silber/Ruthenium-Oberfläche erzeugen ein elektrisches Feld, das auf die geladenen Membranen von Bakterienzellen einwirkt. An den Ruthenium-Mikrokathoden der galvanischen Zellen erzeugen katalytisch unterstützte Redoxreaktionen reaktive Sauerstoffspezies (ROS), z. B. diffusionsfähige Moleküle wie beispielsweise Wasserstoffperoxid, welche die Mikroorganismen abtöten und auf Agarplatten die Bildung von Hemmhöfen um entsprechend beschichtete Netze bewirken. An den Silber/Silberchlorid-Mikroanoden der galvanischen Zellen werden die Mikroorganismen durch den Transfer von Elektronen von den Mikroben zu der halbleitenden Anodenoberfläche oxidiert.

Auch Materialien, die in einer Partikelform in Produkte bzw. Materialien eingearbeitet werden, um die benötigten Produkteigenschaften sicherzustellen bzw. zu erhöhen, werden ebenfalls als hybride Systeme mit verschiedenen Oberflächenzusammensetzungen und -strukturen ausgestaltet, um sie in andere Werkstoffe zu integrieren, damit sie dort ihre spezifischen Partikeleigenschaften in der gesuchten Weise vermitteln. Mehrkomponentige hybride Partikelsysteme sind daher auf den gewünschten Werkstoff und die geforderten Materialeigenschaften gezielt durch die richtige Wahl des Partikelmaterials, der Partikelgröße und -struktur sowie zusätzlich aufgebrachter Schichtsysteme oder durch chemische Nachbehandlungen einer oder mehrerer Komponenten des hybriden Partikelsystems anzupassen. Das gilt auch für partikuläre Systeme mit antimikrobiellen Eigenschaften, die diese antimikrobiellen Eigenschaften in Produkte oder Materialien einbringen sollen. Allerdings besteht die Gefahr, dass bei der Partikel-Verarbeitung oder Partikel-Werkstoffintegration deren gewünschte Kerneigenschaft - die antimikrobielle Wirkung - geschwächt oder sogar verloren geht.

### Zusammenfassung der Erfindung

Es ist Aufgabe der Erfindung, ein antimikrobiell wirksames partikuläres Hybridmaterial zu entwickeln, dass seine antimikrobielle Eigenschaft auch nach der Verarbeitung, der Werkstoffintegration und/oder als Additiv in Produkten aufrechterhalten kann.

Erfindungsgemäß wird die Aufgabe durch ein Hybridmaterial der eingangs genannten Art gelöst, bei dem die Partikel jeweils mindestens ein Trägermaterial umfassen, das zumindest teilweise mit den beiden unterschiedlichen Metallen beschichtet ist, wobei das Trägermaterial Cellulose umfasst und mindestens ein Übergangsmetallelement Ruthenium ist. Insgesamt stellt die Erfindung damit ein hybrides, partikuläres Mehrkomponentensystem zur Verfügung, das einen elektrisch leitfähigen Silberhalbleiter und eine halbleitende Rutheniumverbindung sowie Cellulose als Trägermaterial umfasst und seine breitbandige antimikrobielle Wirksamkeit (die Wirksamkeit gegen Bakterien, Viren, Pilze und sonstige Mikroorganismen wird im Folgenden zur Vereinfachung als "antimikrobiell" bezeichnet) in die unterschiedlichsten Materialien, Werkstoffe und/oder Beschichtungsmaterialien transportieren kann, ohne dass die antimikrobielle Eigenschaft im Verarbeitungsprozess, der Werkstoffintegration oder dem gebrauchsfertigen Produkt verloren geht. Die Materialkomponenten, die für die Verarbeitungsprozesse bzw. die Materialintegration und die Nutzung des fertigen antimikrobiellen Produktes gebraucht werden, insbesondere Cellulose als Trägermaterial, sind so ausgewählt, dass sie die antimikrobielle Eigenschaft des hybriden, partikulären Systems nicht negativ beeinflussen, sondern eher noch stärken. Das erfindungsgemäße Hybridmaterial ist darüber hinaus ein antimikrobiell wirkendes Partikelsystem, das, einstellbar über den hybriden Partikelaufbau, für die Verwendung mit unterschiedlichen Produkten oder Vormaterialien bzw. Werkstoffen und/oder Beschichtungsmaterialien geeignet ist. Dabei kann das erfindungsgemäße Hybridmaterial beispielsweise in den Werkstoff und/oder das Beschichtungsmaterial integriert sein. Durch die Kombination mit dem hybriden Partikelsystem wird dem Produkt oder Vormaterial eine antimikrobielle Eigenschaft vermittelt. Neben der Aufrechterhaltung der antimikrobiellen Wirkung liegt also ein weiterer Vorteil des erfindungsgemäßen Hybridmaterials darin, dass es beispielsweise durch die richtige Wahl der Partikelgröße und -struktur sowie zusätzlich aufgebrachte Schichtsysteme oder durch chemische Nachbehandlungen einer oder mehrerer Komponenten des hybriden Partikelsystems gezielt an das Material, den Werkstoff und/oder das Beschichtungsmaterial und die geforderten Materialeigenschaften sowie die gewünschten Anwendungen derselben anpassbar ist.

Auf dem Trägermaterial sind erfindungsgemäß ein elektrisch leitfähiger Silberhalbleiter und eine halbleitende Rutheniumverbindung abgeschieden, die über eine hohe chemische Stabilität verfügen und unterschiedliche elektrochemische Potentiale besitzen. Es handelt sich um Übergangsmetalle der d-Gruppe und um Edelmetalle. Die erfindungsgemäße Metallkombination ist so auf dem Trägermaterial aufgebracht, dass beide Metalle miteinander in elektrisch leitendem Kontakt stehen und in Form einer Vielzahl von über die wässrige Phase kurzgeschlossenen nano- bzw. mikrogalvanischen Elementen auf der Trägeroberfläche verteilt sind. Die vorliegende Erfindung umfasst somit in vorteilhafter Weise eine antimikrobiell wirksame Metallbeschichtung, die jeweils aus einer halbleitenden, katalytisch aktiven Rutheniumverbindung (Halbelement I eines galvanischen Elementes) und einer halbleitenden, schwer löslichen Silberverbindung (z. B. Silberoxid, Silberhydroxid, Silbersulfid, Silber-Halogen-Verbindungen oder Kombinationen daraus; Halbelement II des galvanischen Elementes) besteht, wobei beide miteinander in direktem, elektrisch leitenden Kontakt stehen. Ruthenium verfügt über mehrere Oxidationsstufen und erlaubt damit über katalytisch aktive Zentren einen (relativ leichten) Wechsel der Oxidationsstufen. Ruthenium weist also mehrere Wertigkeiten auf, an diesem Halbelement über einen großen Potentialbereich hoch reversible Redox-Reaktionen ablaufen können. Die hohe katalytische Aktivität von Ruthenium für die Sauerstoffreduktion ist dabei auf den leichten Wechsel der Oxidationsstufen sowie den leichten Sauerstoffaustausch zurückzuführen, die an den aktiven Zentren der Halbleiteroberfläche bevorzugt stattfinden. Dabei wird Ruthenium nur in seiner Wertigkeit verändert, wodurch die eigentliche Redox-Reaktion entsteht. Deshalb wird die Rutheniumverbindung nicht verbraucht oder gebildet, sondern nur die Oxidationsstufen verändert. Die Rutheniumverbindung bindet den molekularen Sauerstoff, wodurch dieser katalytisch reduziert werden kann. Deshalb ist das Vorhandensein von mehreren Wertigkeiten Voraussetzung für die katalytische Wirkung und die Redox-Reaktion. Es muss also keine Rutheniumverbindung gebildet werden. Spezielle Rutheniumoxide bzw. Rutheniumsulfide und schwer lösliche Silberverbindungen weisen katalytische Eigenschaften, eine elektrische Leitfähigkeit und eine hohe Stabilität in Wasser auf. Durch die geeignete Kombination eines elektrisch leitfähigen Silberhalbleiters und einer halbleitenden Rutheniumverbindung sind zwei Metalle miteinander im elektrischen Kontakt, die ein unterschiedliches elektrochemisches Potential besitzen und somit eine galvanische Zelle bilden. Wird diese Zelle über die wässrige Phase kurzgeschlossen, entsteht aufgrund der geringen Distanz (nm- oder µm-Bereich) zwischen den beiden sich kontaktierenden Metallen eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (Kathode) wird molekularer Sauerstoff zu Sauerstoffradikalen reduziert, die dann toxisch auf die Mikroorganismen wirken. Am zweiten Halbelement (Anode) werden Elektronen von den Mikroorganismen an den Silberhalbleiter abgegeben und diese dadurch oxidativ zerstört.

Die elektrochemische Potentialdifferenz der auf dem Trägermaterial abgeschiedenen Übergangsmetalle des hybriden Systems ist dabei so eingestellt, dass durch Redox-Prozesse der in der feuchten Umgebung befindliche Sauerstoff reduziert und antimikrobiell aktive Sauerstoffradikale gebildet werden können. Das erfindungsgemäße hybride antimikrobielle Partikelsystem, dessen antimikrobielle Wirksamkeit nicht auf der Abgabe von Bioziden oder Metallionen, sondern auf der katalytisch unterstützten Erzeugung von Sauerstoffradikalen beruht, vorzugsweise an einer Edelmetallkombination von Silberoxid/Rutheniumoxid und/oder Silberchlorid/Rutheniumoxid, verändert seine Zusammensetzung auch bei langzeitiger antimikrobieller Anwendung nicht und benötigt im Gegensatz zu Bioziden oder oligodynamischen Metallen kein Depot oder die Biozid- bzw. Metallionenabgabe regulierende Vorrichtungen.

Die beiden Metalle (Halbelemente) können beispielsweise als Schichtsystem auf der Oberfläche des partikulären Trägers (Trägermaterial = Cellulose) aufgebracht sein, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Alternativ oder zusätzlich können die beiden Metalle (Halbelemente) aber beispielsweise auch in Form einzelner Partikel auf der Oberfläche des partikulären Trägers (Trägermaterial) aufgebracht sein. Dabei kann es sich beispielsweise um Bimetallpartikel, die beide Metalle umfassen, und/oder Metallpartikel, die jeweils nur eines der beiden Metalle umfassen, handeln. Letztere können sequenziell, d.h. erst Partikel des ersten Metalls und dann Partikel des zweiten Metalls (oder umgekehrt), oder gleichzeitig als Gemisch von Partikeln beider Metalle so auf das Trägermaterial aufgebracht werden, dass sie in elektrisch leitendem Kontakt stehen. Die Partikel können einschichtig (nebeneinander liegend) und/oder zumindest teilweise mehrschichtig (übereinander liegend) auf dem Trägermaterial aufgebracht sein.

Anders als bei den Bioziden und oligodynamischen Metallen, die für ihre Wirksamkeit toxische Stoffe in die Umwelt abgeben müssen, entsteht bei der Verwendung des erfindungsgemäßen Hybridmaterials aus den gebildeten Sauerstoffradikalen am Ende nur Wasser. Da es sich bei der Metallkombination um ein katalytisch unterstütztes System handelt, ist deren antimikrobielle Wirkung in vorteilhafter Weise ausschließlich von der aktiven Oberfläche und nicht wie bei Bioziden oder den oligodynamischen Systemen (Silber, Kupfer und Zink bzw. deren Salze oder Verbindungen) von deren Menge und Auslaugungsgeschwindigkeit abhängig.

In vorteilhafter Ausgestaltung der Erfindung ist vorgesehen, dass das Trägermaterial zusätzlich mindestens ein Material umfasst, das aus der Gruppe bestehend aus Glas, Zeolith, Silikat, Metall oder einer Metalllegierung, Metalloxid (z.B. TiO₂), Keramik, Graphit und einem Polymer ausgewählt ist. Das erfindungsgemäße Hybridmaterial kann durch die Wahl des Trägermaterials hinsichtlich der Integrationsanforderungen in andere Materialien sowie der spezifischen Gebrauchsanwendungen gezielt eingestellt werden. Beispielsweise in Bezug auf Temperaturbelastbarkeit bei Integration in z. B. Kunststoffe (z. B. Silber-Partikel als Carrier), magnetische Partikel, z. B. für analytische oder Produktions-Anwendungen in Apparaturen, aus denen die Partikelentfernung nur von außerhalb mit einem Magneten möglich ist (Eisenpartikel als Carrier).

Erfindungsgemäß wird als Trägermaterial Cellulose (C)- oder deren Derivate als mikrokristallines (MCC) oder nanokristallines Cellulosepulver (NCC) verwendet, die eine Reihe inhärenter Eigenschaften mitbringen, die die antimikrobielle Wirkung des hybriden Partikelsystems unterstützen, wie z. B. ihre Hydrophilie und eine hohe Wasserbindungskapazität, die im trockenen Zustand noch etwa 5-8 % beträgt. Die Cellulosefasern können nicht nur in der Faserlänge, sondern auch im Faserquerschnitt variiert werden, wodurch die Faseroberfläche erheblich vergrößert werden kann. So stehen neben der im Querschnitt wolkenförmigen "Standardcellulose" auch Fasern mit stern- (Trilobal)- oder Buchstaben-ähnlichen (Umberto)- Querschnitten zur Verfügung. Die Cellulose-Trägeroberfläche kann auch durch sogenannte Bakterielle Cellulose (BC) aufgrund ihrer gewebeähnlichen, feinen Netzwerkstruktur deutlich vergrößert werden. BC besitzt darüber hinaus eine erhöhte Wasseraufnahmekapazität und wird deshalb gern in medizinischen Anwendungen eingesetzt. Die Verwendung von Cellulose als Trägermateial ermöglicht die Integration des erfindungsgemäßen Hybridmaterials in einen Lyocel-Prozess, bei dem die mit dem erfindungsgemäßen Hybridmaterial dotierte Cellulose sich in der organischen Cellulose-Lösung auflöst und die Hybridmaterial-Partikel fein in dem Cellulose-Brei verteilt, aus dem dann Cellulose Fäden gesponnen werden können, oder Farbgestaltung (z. B. weiße Farbe: Carrier Cellulose). Überraschenderweise hat sich bei dem erfindungsmäßen antimikrobiellen Hybridsystem durch die Auswahl von Cellulose als Trägermaterial eine neue Herstellmöglichkeit von antimikrobiellen Textilfasern und Folien ergeben.

Bei der Cellulose handelt es sich um das am häufigsten vorkommende Biopolymer auf der Erde mit einer Bildungsrate von 1,5 Billionen Tonnen jährlich und damit um den global bedeutendsten nachwachsenden Rohstoff. Cellulose wird neben der Textil-, Papier- und Baustoffindustrie auch im Medizinbereich eingesetzt. Die weite Verbreitung des Einsatzes von Cellulose-Werkstoffen, insbesondere deren Einsatz für medizinische Anwendungen, haben zur Entwicklung von antimikrobiell ausgerüsteten Cellulose-Partikeln geführt. Cellulose selbst verfügt über keine antimikrobielle Aktivität, die Infektionen verhindern könnte. Die Mehrzahl der Arbeiten zur Herstellung antimikrobieller Cellulose hat sich bisher mit dem Einbringen von biozidal wirkenden Nano-Silberpartikeln auf bzw. in die Cellulosefasern durch verschiedene Abscheidungsprozesse beschäftigt. Überraschenderweise ist es im Rahmen der vorliegenden Erfindung gelungen, neben Silber auch Ruthenium haftfest auf der Cellulose abzuscheiden. Dabei wurde auf die erfindungsgemäße Weise erreicht, dass die katalytisch unterstützte Sauerstoffradikalbildung an den Silber-Ruthenium-Niederschlägen auch auf dem Cellulose-Träger gegeben ist.

In weiterer vorteilhafter Ausgestaltung der Erfindung ist vorgesehen, dass das Hybridmaterial mit organischen Polymeren, vorzugsweise Polyethylenglycol (PEG), Polydopamin und/oder Chitosan, und/oder mit Ascorbinsäure oder Ascorbinsäurederivaten modifiziert ist. Dabei kann die Modifikation durch eine Vorbehandlung des Trägermaterials vor dem Aufbringen der Metalle, beispielsweise zur Erleichterung der Beschichtung, und/oder eine Nachbehandlung des Hybridmaterials nach dem Aufbringen der Metalle erfolgen. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. So kann beispielsweise die Rieselfähigkeit und/oder Dispergierbarkeit von Partikeln bzw.

Pulver durch eine Nachbehandlung des Hybridmaterials mit z.B. Polydopamin oder Propylenglykol (PG) gezielt eingestellt werden.

In vorteilhafter Ausgestaltung der Erfindung ist ferner vorgesehen, dass die Stärke der antimikrobiellen Wirkung durch ein Einstellen der Menge mindestens eines der beiden Metalle und/oder der Flächenanteile der beiden Metalle auf der Partikeloberfläche gezielt einstellbar ist. Die antimikrobielle Stärke des gewählten antimikrobiellen Hybridmaterials ist also nicht allein durch Veränderung der Partikelmenge, sondern auch durch Variieren seines Aufbaus einstellbar. Das erfindungsgemäße hybride System kann gezielt hinsichtlich der Stärke seiner antimikrobiellen Wirkung (häufig wird nicht die höchste Wirkung gewünscht, Einstellung per Wachstumskurven) und den Anforderungen an die Verwendung bzw. Integration in andere(n) Materialien sowie für die spezifischen Gebrauchsanwendungen eingestellt werden. Beispielsweise kann durch die Variation des Beschichtungsverfahrens die Dicke mindestens einer Metallschicht eingestellt werden. Durch die Form des Trägermaterials und/oder das Reduktionsverfahren bei der Beschichtung kann beispielsweise die Struktur der Metallschichten gezielt beeinflusst werden. Die Stärke der antimikrobiellen Wirkung des erfindungsgemäßen Hybridmaterials kann ferner beispielsweise durch den Einsatz einer definierten Menge mindestens eines Metalls (z.B. Anteil des Metalls am gesamten Hybridmaterial in Gew.-%) gezielt eingestellt werden.

In weiterer vorteilhafter Ausgestaltung der Erfindung ist vorgesehen, dass das mindestens ein weiteres Übergangsmetallelement mindestens ein Metall aus der Gruppe bestehend aus Iridium, Vanadium, Mangan, Nickel, Eisen, Zink, Cobalt, Cer, Molybdän und Wolfram ist.

In besonders vorteilhafter Ausgestaltung der Erfindung ist vorgesehen, dass das Ruthenium in einer oder beiden der Oxidationsstufen VI und IV vorliegt. Ruthenium ist ein Edelmetall, das mehrere Oxidationszustände besitzt und aufgrund seiner unterschiedlichen Wertigkeiten in der Lage ist, beispielsweise unterschiedliche Ruthenium-Oxide zu bilden. Oberflächen-Redox-Übergänge wie Ru(VIII)/Ru(VI), Ru(VI)/Ru(IV), Ru(IV)/Ru(III) und möglicherweise Ru(III)/Ru(II) sind die Ursache für die hohe katalytische Aktivität der Ruthenium-Mischverbindungen und deren guten elektrischen Leitfähigkeiten. Die ungewöhnlich ausgeprägten katalytischen und elektrokatalytischen Eigenschaften der Rutheniumverbindungen hängen dabei von der Variation der Oxidationsstufen ab. Die antimikrobielle Wirkung ist beispielsweise besonders hoch bei erfindungsgemäßen Zusammensetzungen, die im ersten Halbelement Ruthenium(VI)-Oxid umfassen.

Die Übergangsmetallverbindung des ersten Metalls kann dabei mindestens ein entsprechendes Metalloxid, Metalloxyhydrat, Metallhydroxid, Metalloxyhydroxid, Metallhalogenid und/oder mindestens ein Metallsulfid des Übergangsmetallelements umfassen.

In vorteilhafter Ausgestaltung der Erfindung ist ferner vorgesehen, dass der Silberhalbleiter mindestens ein Silberoxid, Silberhydroxid, Silberhalogenid oder Silbersulfid, oder eine Kombination von Silber und einer entsprechenden Silberverbindung (beispielsweise metallisches Silber, das an seiner Oberfläche eine Silberverbindung wie z.B. Silberoxid oder Silberchlorid aufweist), umfasst.

In weiterer vorteilhafter Ausgestaltung der Erfindung ist vorgesehen, dass die Partikel sphärisch oder polyedrisch ausgebildet sind und einen mittleren Durchmesser von höchstens 100 µm, vorzugsweise höchstens 50 µm, insbesondere höchstens 5 µm, aufweisen. Beispielsweise können solche kugelförmigen Partikel einen mittleren Durchmesser zwischen 0,1 und 70 µm, vorzugsweise zwischen 0,1 und 50 µm oder 0,1 und 10 µm, insbesondere zwischen 1 und 5 µm, aufweisen. Alternativ oder zusätzlich können die Partikel faserförmig ausgebildet sein und eine mittlere Länge von höchstens 1 mm, vorzugsweise höchstens 100 µm, insbesondere höchstens 75 µm oder höchstens 60 µm, aufweisen. Beispielsweise können solche länglichen Partikel eine mittlere Länge zwischen 0,1 und 100 µm, vorzugsweise zwischen 0,1 und 50 µm oder 0,1 und 10 µm, insbesondere zwischen 0,1 und 1 µm, aufweisen. Partikelgröße und Form spielen beispielsweise bei Düsenproblemen beim Spinnen von Polymerfäden (z. B. feine Silberpartikel) oder bei geforderter großer Oberfläche (z. B. durch unterschiedliche Cellulosefaser-Querschnitte oder feine Silberpartikel) eine bedeutende Rolle. Da die antimikrobielle Wirkung des erfindungsgemäßen Hybridmaterials auf einem katalytischen Prozess an der Partikeloberfläche beruht, nimmt die Partikeleffizienz bei im Verhältnis zum Partikelvolumen steigendem Oberflächenanteil der Partikel zu. Daher ist die Effizienz der Partikel für kleinere Partikelgrößen besonders vorteilhaft.

Das erfindungsgemäße Hybridmaterial kann durch ein Verfahren hergestellt werden, welches die folgenden Schritte umfasst:
a) Bereitstellen oder Herstellen eines partikelförmigen Trägermaterials (Cellulose),
b) zumindest teilweises Aufbringen eines ersten Metalls auf das Trägermaterial, und
c) zumindest teilweises Aufbringen eines zweiten Metalls auf das Trägermaterial und/oder das erste Metall, wobei die beiden Metalle derart aufgebracht werden, dass sie zumindest mit ihren jeweiligen Oberflächen miteinander in elektrisch leitendem Kontakt stehen.

In einer besonderen Ausführungsform wird das antimikrobielle Hybridsystem mit einem magnetisierbaren Partikelkern ausgestattet. Beispielsweise kann die antimikrobielle Beschichtung auf einem ferromagnetischen Kern (z. B. Nickel-, Eisen-, Cobalt-Pulver) abgeschieden werden. Solche antimikrobiellen Hybridsysteme werden z. B. dort benötigt, wo nach Gebrauch der Partikel deren vollständige Entfernung aus schwer zugänglichen Reaktions- oder Analysengefäßen erfolgen muss. Die antimikrobiellen, magnetisierbaren Partikelhybride können von außerhalb des Reaktors mit einem starken Magneten an eine zugängliche Stelle eines Reaktors gezogen werden, wo sie entnommen werden können.

Vorzugsweise wird ein erstes Metall auf das Trägermaterial aufgebracht, welches mindestens einen elektrisch leitfähigen Silberhalbleiter umfasst. Als zweites Metall wird Ruthenium ebenfalls auf das Trägermaterial und/oder das erste Metall aufgebracht, wobei das Ruthenium über mehrere Oxidationsstufen verfügt und über katalytisch aktive Zentren einen Wechsel der Oxidationsstufen erlaubt. Alternativ kann Ruthenium als erstes Metall auf das Trägermaterial aufgebracht werden, welches über mehrere Oxidationsstufen verfügt und über katalytisch aktive Zentren einen Wechsel der Oxidationsstufen erlaubt. In diesem Fall wird ein zweites Metall ebenfalls auf das Trägermaterial und/oder das erste Metall aufgebracht, wobei das zweite Metall mindestens einen elektrisch leitfähigen Silberhalbleiter umfasst. Bei beiden Alternativen wird das zweite Metall derart durchlässig auf das Trägermaterial und/oder das erste Metall aufgebracht, dass die beiden Metalle zumindest mit ihren jeweiligen Oberflächen miteinander in elektrisch leitendem Kontakt und jeweils in Kontakt mit einem Elektrolyten stehen und dadurch eine antimikrobielle Wirkung entfalten können (siehe oben).

Zur Herstellung eines erfindungsgemäßen Hybridmaterials kann Silber chemisch-reduktiv auf dem Trägermaterial abgeschieden werden. Als Silbersalz wird vorzugsweise Silbernitrat (AgNOs) verwendet. Als Reduktionsmittel können verschiedene Reduktionsmittel eingesetzt werden, beispielsweise Aldehyde, Ascorbinsäure, Metallhydride (vorzugsweise Natriumborhydrid), Hydrazin und/oder ein Hydraziniumsalz, und/oder Hydroxylamin und/oder ein Hydroxylammoniumsalz. Für die Cellulose als Trägermaterial wird vorzugsweise Ascorbinsäure als Reduktor eingesetzt. Auf die Silberschicht kann dann Ruthenium ebenfalls chemisch-reduktiv aufgebracht werden. Für die Ruthenium-Beschichtung wird das silberbeschichtete Trägermaterial in alkalischer Lösung unter starkem Rühren dispergiert. Dann werden Lösungen von Ruthenium(III)chlorid und Natriumborhydrid als Reduktionsmittel zugeführt.

In vorteilhafter Ausgestaltung des Herstellungsverfahrens ist vorgesehen, dass zumindest eines der beiden Metalle clusterförmig, nanoporös, mikrorissig und/oder in Form einzelner Partikel auf das Trägermaterial und/oder das jeweils andere Metall aufgebracht wird.

In vorteilhafter Ausgestaltung des Herstellungsverfahrens ist ferner vorgesehen, dass das Trägermaterial und/oder die Metalle nach Schritt a) und/oder Schritt c) mit organischen Polymeren, vorzugsweise Polyethylenglycol, Polydopamin und/oder Chitosan, und/oder mit Ascorbinsäure oder Ascorbinsäurederivaten modifiziert wird/werden. Folglich kann das Hybridmaterial durch eine Vorbehandlung des Trägermaterials vor dem Aufbringen der Metalle, beispielsweise zur Erleichterung der Beschichtung, und/oder eine Nachbehandlung nach dem Aufbringen der Metalle modifiziert werden. Auf diese Weise können bestimmte Eigenschaften des mit dem erfindungsgemäßen Hybridmaterial dotierten Produkts (Werkstoff und/oder Beschichtungsmaterial) verändert bzw. verbessert werden. Erfindungsgemäß kann beispielsweise das Trägermaterial mit der antimikrobiellen Metallbeschichtung, ohne oder mit einer chemischen erzeugten Verbindungsschicht (siehe unten), modifiziert werden, um die Eigenschaften des Hybridmaterials zu optimieren. Dies betrifft z.B. die Rieselfähigkeit, Dispergierbarkeit oder die Langzeitstabilität. Erfindungsgemäß bleiben dabei trotz der Modifizierung des hybriden Partikelsystems deren antimikrobielle Eigenschaften erhalten oder werden sogar verbessert.

In weiterer vorteilhafter Ausgestaltung des Herstellungsverfahrens ist vorgesehen, dass auf mindestens einem Metall eine Verbindungsschicht erzeugt wird, die mindestens eine Metallverbindung des entsprechenden Metalls umfasst, welche aus der Gruppe bestehend aus Halogeniden, Oxiden und Sulfiden ausgewählt ist. Zur Steigerung der Funktion werden die beiden Metalle dabei mit einer chemisch stabilen Verbindung der Metalle aktiviert. Zu diesem Zweck wird auf den Metallen eine Verbindungsschicht erzeugt, die beispielsweise aus einem Halogenid, Oxid oder Sulfid bestehen kann. Der Einfluss der Nachbehandlung der partikulären Oberflächen kann beispielsweise anhand geeigneter mikrobiologischer Methoden bzw. Messverfahren, wie z.B. durch Wachstumskurven, ermittelt bzw. entsprechend eingestellt werden.

In vorteilhafter Ausgestaltung des Herstellungsverfahrens ist ferner vorgesehen, dass die Stärke der antimikrobiellen Wirkung durch ein Einstellen der Menge mindestens eines der beiden Metalle und/oder der Flächenanteile der beiden Metalle auf der Partikeloberfläche gezielt eingestellt wird. Beispielsweise kann die Stärke der antimikrobiellen Wirkung des hybriden Partikelsystems durch entsprechende Wahl der Abscheidungsbedingungen für die beiden Metalle auf der Oberfläche des Trägermaterials gesteuert werden, wobei die Flächenanteile der beiden Metalle auf der Hybridoberfläche gegeneinander verändert werden. Die für gewünschte antimikrobielle Wirkung des erfindungsgemäßen partikulären Hybridmaterials gesuchte Oberflächenzusammensetzung lässt sich anhand geeigneter mikrobiologischer Methoden, wie beispielsweise durch Wachstumskurven, anhand der Variation der Partikelzusammensetzung und - aufbau ermitteln.

In weiterer vorteilhafter Ausgestaltung des Herstellungsverfahrens ist vorgesehen, dass das jeweilige Metall sequenziell oder gleichzeitig mittels elektrochemischer Abscheidung, chemisch-reduktiver Abscheidung, elektrophoretischer Beschichtung, Calcinieren, PVD-, CVD- und/oder Sol-Gel-Verfahren aufgebracht wird. Die beiden Metalle (Halbelemente) können dabei beispielsweise auch in Form einzelner Partikel auf der Oberfläche des Trägermaterials aufgebracht werden. Die Partikel können z.B. sequenziell, d.h. erst Partikel des ersten Metalls und dann Partikel des zweiten Metalls (oder umgekehrt), oder gleichzeitig als Gemisch von Partikeln beider Metalle (oder ggf. in Form von Bimetallpartikeln) auf das Trägermaterial aufgebracht werden.

Bei der Calcinierung werden thermisch leicht zersetzbare Verbindungen, die die gewünschten Übergangsmetalle (meist wasserfrei) enthalten, z.B. in Alkoholen (z.B. Ethanol oder Isopropanol), intensiv gemischt, auf die zu beschichtende Oberfläche aufgetragen und anschließend bei hohen Temperaturen (z.B. 200-500 °C) bei Luftanwesenheit thermisch zersetzt. Dabei kann durch Mischung der beiden Metallsalze jede gewünschte Zusammensetzung der beiden Halbelement-Metalle eingestellt werden, um die entsprechenden oxidischen Verbindungen zu erzielen. Zu den leicht zersetzbaren Rutheniumverbindungen gehört beispielsweise das RuCl₃ (Halogenide allgemein).

Das Aufbringen des zweiten Metalls auf das Trägermaterial und/oder das erste Metall kann mindestens einen Schritt mit starker oxidativer Wirkung umfassen. Beispielsweise können Ruthenium/Ruthenium-Oxide in einem zweistufigen Verfahren abgeschieden werden, wobei im ersten Schritt zunächst eine Aufoxidation von Ruthenium erfolgt und erst im zweiten Schritt die Reduktion des aufoxidierten Rutheniums zu Ruthenium und RuOx durchgeführt wird. Anders als bei der direkten, einstufigen Reduktion der Ru(III)-Ionen durch ein starkes Reduktionsmittel, beruht dieses indirekte, zweistufige Verfahren auf der Oxidation von Ru(III)-Ionen zu Ruthenium(VIII)-oxid (RuO₄). RuO₄ ist ein starkes Oxidationsmittel, das durch geeignete Reduktionsmittel in Ruthenium(IV)-Oxid überführt wird, wobei das Substrat mit einer Schicht an Ruthenium(IV)-Oxid überzogen wird. Beispielsweise kann die Bildung von Ruthenium(VI)-Oxid sowohl bei einer elektrochemischen wie bei einer PVD Abscheidung von Ruthenium erzielt werden, wenn die Ruthenium-Abscheidung einen Prozessschritt mit starker oxidativer Wirkung umfasst.

Nach dem Aufbringen der beiden Metalle kann eine thermische Nachbehandlung zur Einstellung spezifischer Oxidationsstufen durchgeführt werden. Die abgeschiedenen oxidischen Metall-Beschichtungen bzw. Metallverbindungen können, ein thermisch beständiges Trägermaterial vorausgesetzt, zur Einstellung spezifischer Oxidationsstufen einer thermischen Oxidation bzw. Reduktion in geeigneter Atmosphäre unterzogen werden.

Das erfindungsgemäße Hybridmaterial kann zur gemeinsamen Anwendung mit beliebigen Materialen, Werkstoffen und/oder Beschichtungsmaterialien, vorzugsweise Lacken, Farben, Putzen, Polymeren und/oder Cellulose verwendet werden. Dabei kann das Hybridmaterial auf beliebige Art und Weise mit den Materialien, Werkstoffen und/oder Beschichtungsmaterialien assoziiert sein. Beispielsweise können die Materialien, Werkstoffe und/oder Beschichtungsmaterialien mit den Hybridmaterial-Partikeln beschichtet oder mit diesen vermengt sein. Vorzugsweise sind die Partikel des erfindungsgemäßen Hybridmaterials in die Materialien, Werkstoffe und/oder Beschichtungsmaterialien integriert.

Das erfindungsgemäße Hybridmaterial bietet überraschender Weise die Möglichkeit mit Hilfe der innovativen und umweltfreundlichen Lyocell-Technologie antimikrobielle Cellulose-Fasern und Cellulose-Folien auf Basis des erfindungsgemäßen antimikrobiellen Hybridsystems herzustellen, da das Cellulose-Silber-Ruthenium-Partikel-Additiv, trotz seiner katalytischen Aktivität, keinen entscheidenden Einfluss auf die Zersetzungstemperatur des im Lyocell-Prozess verwendeten Lösungsmittels (N-methymorpholine N-Oxid (NMMO)) nimmt und somit in dem Lyocell-Prozess verarbeitbar ist. Im Lyocell-Prozess löst sich der Trägerwerkstoff Cellulose im NMMO auf und setzt die auf den Cellulose-Fasern abgeschiedenen Silber-Ruthenium-Partikel in dem Cellulose-haltigen Lösemittel gleichmäßig verteilt frei, so dass daraus antimikrobielle Lyocell-Fasern für die Textilindustrie, aber auch für Vliesstoffe (Non-wovens) und weitere technische Anwendungen wie Folien, z. B. für Verpackungen, hergestellt werden können.

Die erfindungsgemäßen partikulären Materialien eignen sich z. B. dazu, Lacke und Farben, Putze, Polymere, Textilien und Verpackungsmaterialien mit antimikrobiellen Eigenschaften auszustatten. Vorteilhaft ist ein hybrides antimikrobiell wirkendes Partikelsystem besonders dann, wenn neben der Wirkkomponente, die weiteren Bestanteile des Hybridsystems zusätzliche positive Eigenschaften einbringen können, die die Wirkung, die Verarbeitung oder die Integration in das gewünschte Halbzeug oder das fertige Produkt unterstützen oder verbessern können.

"Partikel", "partikelförmig" oder "partikulär" im Sinne der Erfindung bezeichnet einzelne teilchenförmige Körper, die als Ganzes gegenüber anderen Partikeln und ihrer Umgebung abgegrenzt sind. Dabei sind im Rahmen der Erfindung alle möglichen Partikelformen und -größen, unabhängig von Geometrie und Masse, eingeschlossen. Eine Charakterisierung der Partikel kann beispielsweise über ihre Form, ihr Gewicht, ihr Volumen und/oder ihre Größe (z.B. Länge, Durchmesser, Umfang) erfolgen.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge die Redoxprozesse an den Elektroden in Gang.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Werkstoff" im Sinne der Erfindung bezeichnet ein Material, aus dem ein Teil, Bauteil, Bauelement oder eine Baugruppe eines Gegenstands bzw. Produkts besteht. Insbesondere umfasst der Begriff "Werkstoff" u.a. Teile aus mindestens einem Polymer (Kunststoff; einschl. Folien als Verpackungsmaterial), Textilien (natürliche und/oder synthetische Textilfasern; gewebte, gewirkte, gestrickte und geflochtene Stoffe), Vliesstoffen, Metallen, Glas und Keramik.

"Beschichtungsmaterial" im Sinne der Erfindung bezeichnet ein Material oder einen Stoff, mit dem ein Gegenstand bzw. Produkt zumindest teilweise bedeckt ist bzw. werden kann. Das Beschichtungsmaterial kann dabei in einer oder mehreren (vorzugsweise dünnen) Schicht(en) auf den Gegenstand bzw. das Produkt aufgebracht sein bzw. werden. Insbesondere umfasst der Begriff "Beschichtungsmaterial" u.a. flüssige oder pastöse Beschichtungsstoffe wie z.B. Lacke, Farben und Putze, sowie feste Beschichtungsstoffe wie z.B. Pulver und Folien.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

"Schicht" oder "schichtförmig" im Sinne der Erfindung bezeichnet eine zwei- oder dreidimensionale Struktur, die eine horizontale Ausdehnung hat und zumindest durch zwei Flächen, die Schichtunterseite und die Schichtoberseite, begrenzt ist. Dabei kann eine Schicht aus einem zusammenhängenden Material bzw. Stoff und/oder sich zumindest teilweise berührenden Partikeln bestehen. Eine Schicht kann im Sinne der Erfindung homogen, heterogen, durchgehend (d.h. ununterbrochen), clusterförmig, nanoporös und/oder mikrorissig ausgebildet sein. "Beschichtet" im Sinne der Erfindung ist ein Material, Partikel oder sonstiger Körper, wenn zumindest ein Teil seiner (äußeren oder inneren) Oberfläche mit einer "Schicht" (siehe oben) versehen ist.

Die Erfindung wird im Weiteren anhand der folgenden Abbildungen und Beispiele exemplarisch näher erläutert.

### Kurze Beschreibung der Abbildungen

**Figur 1** zeigt eine schematische Abbildung einer beispielhaften Ausführungsform des erfindungsgemäßen Hybridmaterials.
**Figur 2** zeigt fotografische Abbildungen beispielhafter Ausführungsformen des erfindungsgemäßen Hybridmaterials.
   a) Unbeschichtetes Cellulose-Pulver;
   b) beschichtetes, antimikrobielles Cellulose-Pulver mit einem Silbergehalt von 20 Gew.-% sowie einem Rutheniumgehalt von 1 Gew.-%;
   c) Verteilung der beiden Metalle auf der Cellulosefaser; und
   d) Hemmhoftest erfindungsgemäß hergestelltem Pulver.
**Figur 3** zeigt Wachstumskurven von MRSA-Kulturen (Quelle: Robert-Koch-Institut) in Anwesenheit des erfindungsgemäßen Hybridmaterials (Pulvers) gemäß Figur 2.
   a) Ermittlung der minimalen Hemm-Konzentration; und
   b) Abhängigkeit der antimikrobiellen Effizienz der Cellulose-Partikel vom Ruthenium-Gehalt.
**Figur 4** zeigt fotografische Abbildungen, ein Balkendiagramm und eine Tabelle zur antimikrobiellen Wirksamkeit einer mittels eines Lyocell-Prozesses hergestellten Cellulose-Folie bzw. eines entsprechenden Fadens.
   a) Cellulose-Folie;
   b) Hemmhoftest zur antimikrobiellen Wirksamkeit des erfindungsgemäß hergestellten Cellulose-Fadens gegen E. *coli* (DSM 498); und
   c) antimikrobielle Wirkung eines partikulären Cellulose-basierten Silber-Ruthenium-Hybrids (720b) gegen *S*. *aureus* (DSM 799).
**Figur 5** zeigt eine grafische Darstellung (Kurve) eines Virus-Plaque-Tests zur Wirksamkeit einer Ausführungsform des erfindungsgemäßen Hybridmaterials gegen SARS-CoV-2 und den Feline Coronavirus (FCoV).
   a) Feline Coronavirus (FCoV); und
   b) SARS-CoV-2.
**Figur 6** zeigt fotografische Abbildungen mehrerer Proben eines kommerziellen Antifouling-Anstrichs, die mit steigenden Konzentrationen (2,0 Gew.-%, 4,0 Gew.-% und 8,0 Gew.-%) einer weiteren beispielhaften Ausführungsform des erfindungsgemäßen Hybridmaterials versetzt wurden, das auf Cellulose-Pulver präpariert wurde.
**Figur 7** zeigt fotografische Abbildungen einer beispielhaften Ausführungsform des erfindungsgemäßen Hybridmaterials, das durch starkes Rühren im Wasser gleichmäßig verteil ist.
   a) Partikel des Hybridmaterials ohne Nachbeschichtung; und
   b) Partikel des Hybridmaterials, die nachträglich mit einer Dopamin-Hydrochloridlösung (2 mg/ml) und einem Phosphatpuffer (0,1 M, pH 8,5) bei RT behandelt wurden.
**Figur 8** zeigt eine fotografische Abbildung eines Hemmhoftests zur antimikrobiellen Wirksamkeit einer beispielhaften Ausführungsform des erfindungsgemäßen Hybridmaterials auf Cellulose-Basis, dessen Wirksamkeit durch eine Nachbehandlung nicht beeinträchtigt wird.
**Figur 9** zeigt fotografische Abbildungen eines Cellulose-basierten antimikrobiellen Hybridmaterials, das in Siloxane integriert wurde und diese mit antimikrobieller Wirksamkeit ausrüstet.
   a) Siloxan-Coatings H 2084 und H 5055; und
   b) antimikrobielle Untersuchungsergebnisse für E. *coli* auf einem Agar mit einseitig Siloxan-beschichteten Polypropylen-Plättchen.

### Beschreibung beispielhafter und bevorzugter Ausführungsformen der Erfindung

Erfindungsgemäß wird das partikuläre Hybridmaterial auf der Basis eines Kernwerkstoffes (Trägermaterials) hergestellt, wobei beispielsweise zunächst eine erste geschlossene Schicht mit einem der beiden erfindungsgemäßen Elektrodenmetalle auf dem Kernwerkstoff (Cellulose) aufgetragen wird. Im Anschluss daran wird das zweite Elektrodenmetall als nicht geschlossene, clusterförmige, poröse oder mikrorissige dünne zweite Schicht auf den Kernwerkstoff und/oder die erste Elektrodenschicht aufgetragen. Diese Beschichtungen können mit konventionellen elektrolytischen Prozessen, chem isch-reduktiv oder über Abscheidungen aus der Gasphase erfolgen. Vorzugsweise werden chemisch-reduktive Verfahren angewendet, bei denen die Metalle durch chemische Reduktion auf dem gewählten Trägermaterial aufgetragen werden. Geeignete Reduktionsmittel sind beispielsweise Aldehyde, Ascorbinsäure, Hydrazin, Hydroxylamin oder Metallhydride. Um zu verhindern, dass das Reduktionsmittel die Metallionen bereits in der Lösung und nicht auf den Partikelkernen abscheidet, was die Lösung zersetzen und zu einem Metallverlust führen würde, können dem Elektrolyten geeignete Inhibitoren zugesetzt werden, die erfahrenem galvanischen Personal bekannt sind. Bei der Ruthenium-Abscheidung kann als geeigneter Inhibitor beispielsweise Ethylendiamin zugesetzt werden. In Abhängigkeit vom verwendeten Reduktionsmittel muss die Substratoberfläche mit einem Katalysator aktiviert werden. Da Silber die Zersetzung von Natriumborhydrid bewirkt, ist für diese Kombination keine zusätzliche Aktivierung notwendig.

Die Abscheidung der beiden Metalle auf dem Trägermaterial kann beispielsweise in einem zweistufigen Prozess durchgeführt werden, da beide Metalle i. d. R. galvanisch aus unterschiedlich zusammengesetzten Elektrolyten abgeschieden werden können. Vorzugweise wird die chemisch-reduktive Metallabscheidung batch-weise durchgeführt, wobei die im Elektrolyten enthaltene Metallmenge vollständig auf den Partikelkernen abgeschieden wird. Die Überprüfung der vollständigen Ausarbeitung des Elektrolyten kann mit klassischen Analyseverfahren, wie der AAS oder ICP, erfolgen, was nicht nur für die Qualitätskontrolle, sondern insbesondere bei der Verwendung von Edelmetallen als antimikrobielle Schichtwerkstoffe unerlässlich ist. Um die gleichmäßige und vollständige Abscheidung der Metalle auf den Partikelkernen zu erreichen, ist die dosierte Zugabe der Metallverbindungen, Reduktoren sowie weiterer chemischer Zusätze in den Reaktor bei gleichzeitiger hoher Elektrolytbewegung, z. B. durch Rührer bzw. Mixer (Kneter bei Cellulose) durchzuführen. Temperierung bzw. Kühlung und klassische Elektrolytkontrollen wie Messung des pH-Wertes sind für die Qualitätssicherung der hybriden antimikrobiellen Partikel sowie die Prozesssicherheit von Bedeutung.

Die Nachbeschichtung des antimikrobiellen Hybridmaterials erfolgt in separaten Reaktoren, beispielsweise durch Zugabe unter gleichmäßigem Rühren zu einer wässrigen Lösung, die den Reaktanden enthält. Dabei findet an der Metalloberfläche des hybriden Systems beispielsweise durch Verwendung von Halogenid- oder Sulphid-haltigen wasserlöslichen Verbindungen, Ascorbinsäure, Chitosan, Polyethylenglykol, Polydopamin eine chemische Umsetzung oder Chemisorption an der Oberfläche der Metalle auf dem erfindungsgemäßen Hybridmaterial statt.

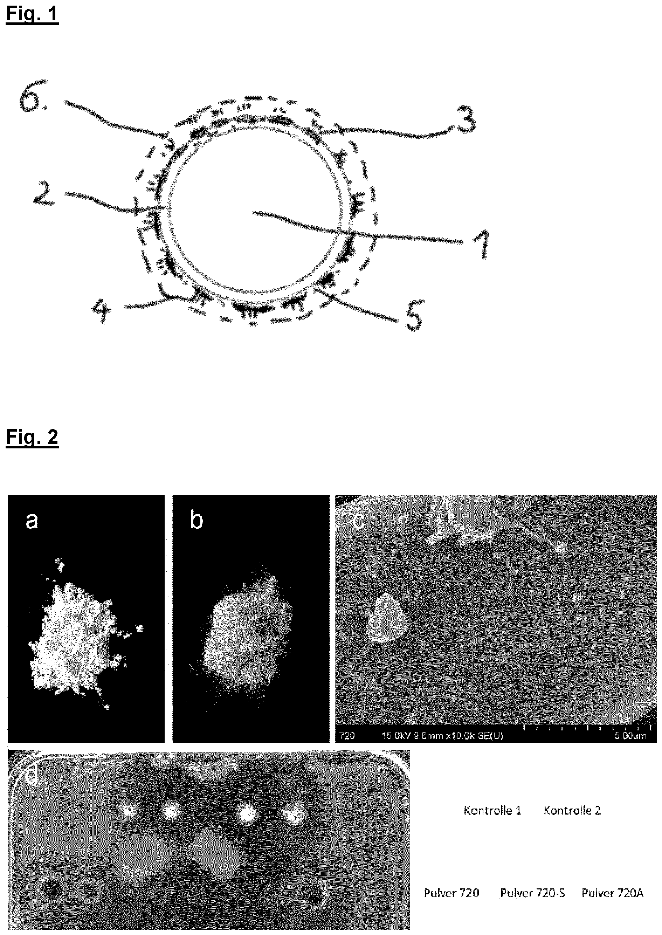

**Figur 1** zeigt schematisch den Aufbau des partikulären antimikrobiellen Hybridmaterials, dessen Form und Größe maßgeblich vom Partikelkern (1) bestimmt wird. Die Partikelgröße liegt i. d. R. bei < 50 µm, vorzugsweise < 5 µm. Bei faserförmigen Partikeln kann die Längenausdehnung, je nach Anwendung, bei < 1mm, vorzugweise < 60 µm, vorzugsweise, < 1 µm betragen.

Auf dem Kern (1) ist eine erste, weitgehend geschlossene Silberschicht (2) aufgetragen.

Über der ersten Schicht (2) des hybriden Systems ist das zweite Metall, Ruthenium, als sehr dünne, nanoporöse Schicht (3) aufgetragen. Erste (2) und zweite Schicht (3) über dem Kern (1) sind so aufgebaut, dass Sauerstoff aus der feuchten Umgebung, an dem kathodischen Teil des aufgebrachten Materials der Hybridoberfläche reduziert wird und Sauerstoffradikale gebildet werden.

Die metallischen Komponenten der ersten (2) und zweiten Schicht (3) können durch chemische Reaktionen an der Oberfläche jeweils in eine Metallverbindung (4), z.B. ein Metallhalogenid oder Metallsulfid, umgewandelt werden bzw. durch eine oxidierende Lösung eine Oxidschicht ausbilden bzw. eine bestehende Oxidschicht in eine Mischoxidschicht mit veränderten Wertigkeiten umwandeln. Das hybride Schichtsystem auf den Partikeln kann alternativ mit einer chemisorbierten Ascorbinsäureschicht (5) versehen werden.

Das Hybridsystem kann zusätzlich mit einer polymeren Schicht (6) aus Chitosan, Polyethylenglykol oder Polydopamin versehen werden, die die antimikrobielle Wirkung nicht inhibieren.

Je nach dem benötigten Eigenschaftsprofil, können die chemisch-reduktiv abgeschiedenen Metalle und chemisch aufgebrachten anorganischen oder organischen Schichten in ihrer lateralen Verteilung, Dicke und Struktur variabel eingestellt werden.

**Figur 2** zeigt ein antimikrobielles partikuläres Hybridmaterial, das auf Basis von Cellulose-Pulver mit einer mittleren Faserlänge von 60 *µm* präpariert wurde. Das Cellulose-Pulver wurde zunächst mit einer Lösung von Silbernitrat getränkt. Dann wurden die Silberionen durch Zugabe von Ascorbinsäure reduziert. Es entstand grauweißes, versilbertes Cellulose-Pulver. Das versilberte Cellulose-Pulver wurde anschließend in alkalischer Lösung unter starkem Rühren dispergiert. Dann wurden Lösungen von Ruthenium(III)chlorid und Natriumborhydrid als Reduktionsmittel zugesetzt. Es entstand dunkelgraues Pulver, dessen Farbe maßgeblich vom Gehalt an Ruthenium abhängt. Figur 2a zeigt das unbeschichtete Cellulose-Pulver und Figur 2b zeigt das beschichtete, antimikrobielle Pulver mit einem Silbergehalt von 20 Gew.-% sowie einem Rutheniumgehalt von 1 Gew.-%. Die REM Aufnahme der Faseroberfläche in 10.000-facher Vergrößerung nach Figur 2c zeigt die gleichmäßige Verteilung der beiden Metalle auf der Cellulosefaser. Der Hemmhoftest nach Figur 2d zeigt, dass verschiedene Chargen des nach diesem Verfahren hergestellten Pulvers über eine hohe antimikrobielle Aktivität verfügen.

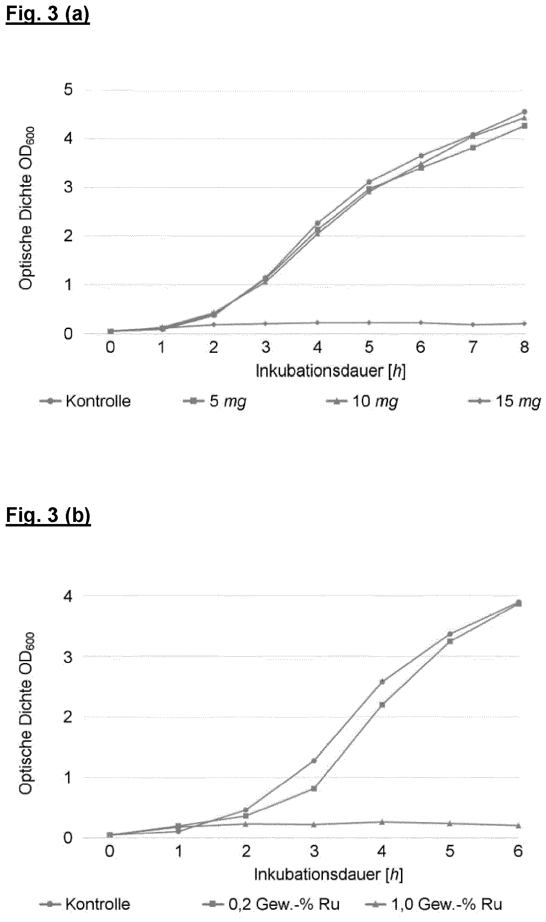

**Figur 3** a zeigt die Ermittlung der minimalen Hemm-Konzentration des antimikrobiellen Pulvers auf beschichteter Cellulose durch die Erstellung von MRSA-Wachstumskurven. Als Kontrolle diente eine Probe ohne Zusatz des antimikrobiellen Pulvers. Die minimale Hemm-Konzentration für das präparierte Pulver beträgt lediglich 15 *mg.* **Figur 3** **b** zeigt, dass die antimikrobielle Effizienz der präparierten antimikrobiellen Partikel auf Cellulose-Basis ebenfalls von dessen Gehalt an Ruthenium abhängt. Für einen Ruthenium-Gehalt von 0,2 Gew-% ist nach der ermittelten Wachstumskurve lediglich eine leichte Inhibierung des Bakterienwachstums von MRSA zu erkennen, während für einen Ruthenium-Gehalt von 1,0 Gew.-% eine vollständige Inhibierung des Wachstums erfolgt. Als Kontrolle diente wiederum eine Probe ohne Zusatz des antimikrobiellen Pulvers. Die Einwaage der Pulver betrug jeweils 20 *mg.*

Obgleich alle hybriden Silber-Ruthenium-Partikel auf Cellulose-Trägermaterial eine antimikrobielle Wirkung zeigen, lässt sich die antimikrobielle Wirksamkeit anhand von Wachstumskurven mit MRSA-Keimen noch einmal hinsichtlich ihrer Stärke differenzieren. In **Tabelle 1** ist zu erkennen, dass sowohl die Rutheniumwie auch die Silber-Anteile (Mengen) Einfluss auf die Stärke der Wirksamkeit gegen MRSA nehmen. Über beide Metalle lässt sich die antimikrobielle Wirksamkeit des erfindungsgemäßen Hybridmaterials hinsichtlich der benötigten Stärke steuern. Tabelle 1 zeigt dabei analysierte Silber- und Ruthenium-Mengen [Gew. %] bezogen auf das gesamte Hybridmaterial, wobei die jeweilige antimikrobielle Stärke entsprechend der Legende mit (x+) bewertet wurde. Grundsätzlich ist festzustellen, dass letztlich alle Materialvarianten bei ausreichender Menge eine vollständige antimikrobielle Wirkung zeigen. Messtechnisch wurde daher die Partikelmenge solange reduziert, bis eine Differenzierung vorgenommen werden konnte, weil nicht alle Varianten eine vollkommene MRSA-Abtötung bewirken. Sofern bei geringerer Einwaage immer noch eine 100 %ige Wirkung einer Silber-Ruthenium-Variante feststellbar war, wurde diese als besonders wirksame Zusammensetzung eingeordnet. Somit wurde in Tabelle 1 entsprechend der Einwaagen die Bewertung für die angegebenen Varianten dargestellt.

**Tabelle 1**

| C-720 | Silber (Gew. %) | Ruthenium (Gew. %) | Antimikrobielle Wirksamkeit |
|---|---|---|---|
| 1.1 | 18,13 | 1,44 | +++++ |
| 2.2 | 10,93 | 1,01 | ++++ |
| 2.1 | 18,4 | 0,1 | +++ |
| 2.3 | 10,9 | 0,11 | ++ |

| | | | |
|---|---|---|---|
| +++++ = sehr stark; ++++ = stark; +++ = mittel; ++ = schwach | | | |

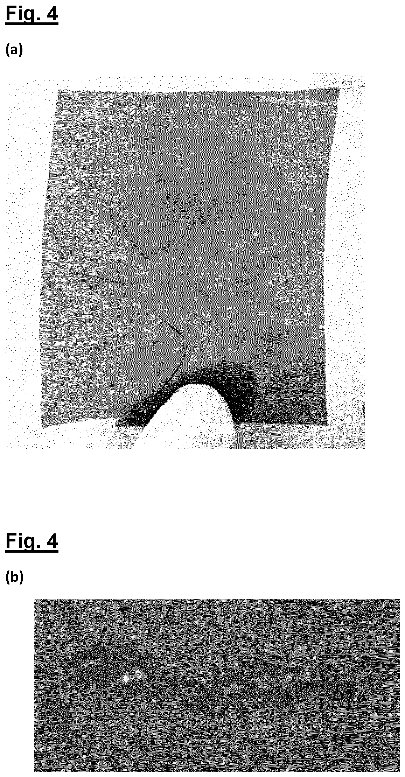

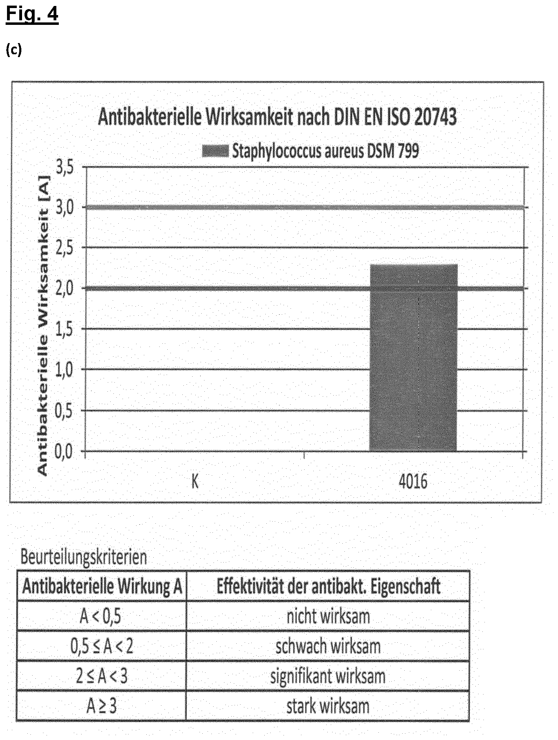

**Figur 4** **a** zeigt eine über den Lyocell-Prozess hergestellte antimikrobielle Cellulose-Folie, die durch Zugabe des erfindungsgemäß hergestellten antimikrobiellen Hybridmaterials auf Cellulose-Basis zum Lyocell-Prozess hergestellt worden ist. In gleicher Weise konnten nach dem Lyocell-Prozess auch antimikrobielle Cellulose-Fäden hergestellt werden. **Figur 4** **b** zeigt die antimikrobielle Wirksamkeit des erfindungsgemäß hergestellten Cellulose-Fadens gegen E. *coli* (DSM 498) anhand des um den dünnen Faden herum ausgebildetem Hemmhofes. **Figur 4** **c** zeigt die nach DIN EN ISO 20743 ermittelte signifikante antimikrobielle Wirkung gegen *S*. *aureus* (DSM 799) durch den Zusatz von lediglich 3 % des partikulären Cellulose-basierten Silber-Ruthenium-Hybrids (720b) zur Cellulose-Spinnlösung.

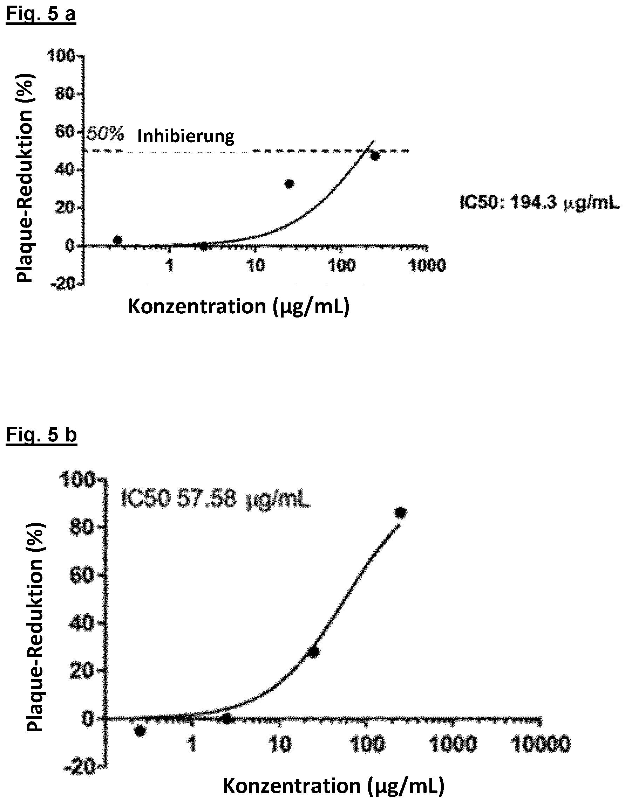

**Figur 5** zeigt die Wirksamkeit des erfindungsgemäß hergestellten partikulären antimikrobiellen Hybridmaterials gegen SARS-CoV-2 und den noch schwieriger zu inhibierenden Feline Coronavirus (FCoV). Die Tests wurden an der FU-Tier-Veterinärmedizin anhand des sogn. Plaque-Tests durchgeführt. Virus-Plaque-Tests bestimmen die Anzahl der Plaque-bildenden Einheiten (pfu) in einer Virusprobe, die ein Maß für die Virusmenge ist. Dieser Assay basiert auf einer mikrobiologischen Methode, die in Petrischalen oder Multiwell-Platten durchgeführt wird. Eine virale Plaque wird gebildet, wenn ein Virus eine Zelle innerhalb der fixierten Zell-Monolage infiziert. Die virusinfizierte Zelle lysiert und die Infektion wird auf benachbarte Zellen übertragen, wo sich der Infektion-Lyse-Zyklus wiederholt. Der infizierte Zellbereich bildet eine Plaque (ein Infektionsbereich, der von nicht infizierten Zellen umgeben ist), die mit einem Lichtmikroskop oder visuell sichtbar gemacht werden kann. Der Plaque-Reduktionsassay zeigt in **Figur 5** **a**, dass die erfindungsgemäß hergestellten Cellulose basierten antimikrobiellen Partikel bereits ab einer Konzentration von ca. 0,2 mg/ml antiviral gegen den Feline Coronavirus wirken (IC50: 50% der Viren abtötet). Bei der in **Figur 5** **b** wiedergegebenen antiviralen Wirkung des erfindungsgemäßen antimikrobiellen Cellulose-basiertem partikulären Hybridmaterials gegen SARS-CoV-2 liegt der IC50 bei ca. 0,05 mg/ml sogar noch deutlich niedriger. Damit eignet sich das erfindungsgemäße antimikrobielle Hybridsystems für die Bekämpfung von Viren durch Integration der Partikel in Farben, Lacke, Kunststoffe.

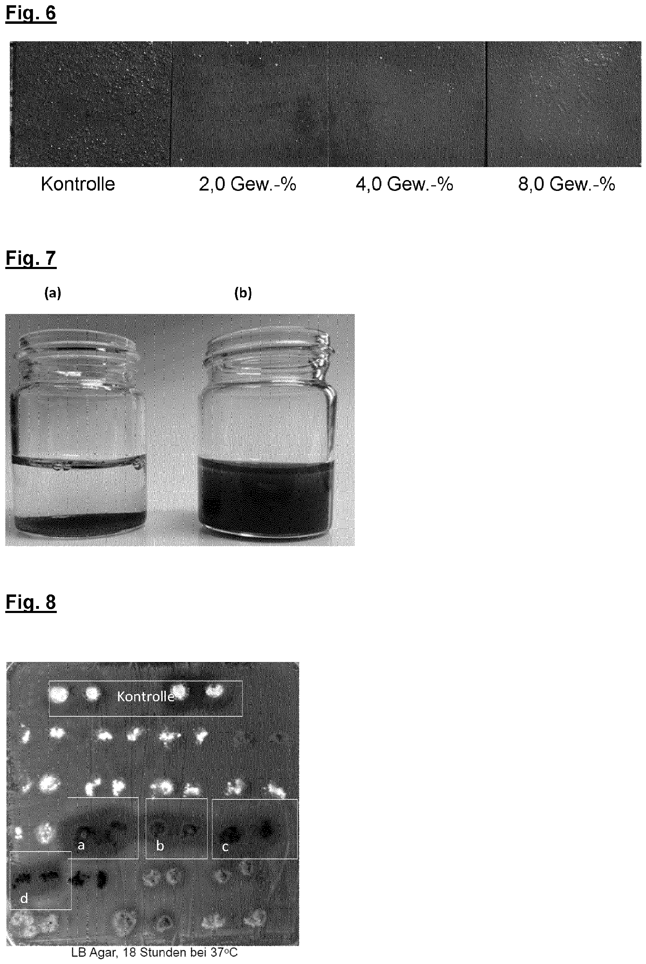

**Figur 6** zeigt mehrere Proben eines kommerziellen Antifouling-Anstrichs, die mit steigenden Konzentrationen an antimikrobiellem Hybridmaterial-Pulver versetzt wurden, das auf Cellulose-Pulver präpariert wurde. Die Konzentrationen des Pulvers betragen 2,0 Gew.-%, 4,0 Gew.-% und 8,0 Gew.-%. Als Kontrolle diente der Antifouling-Anstrich ohne Zusatz des antimikrobiellen Pulvers. Die Proben wurden für 6 Wochen in der Nordsee ausgelagert. Nach dieser Zeit zeigt die Kontrollprobe bereits einen deutlichen Bewuchs, während die Probe mit 2,0 Gew.-% an antimikrobiellem Pulver nur an vereinzelten Stellen einen Bewuchs aufweist. Mit steigender Konzentration an antimikrobiellem Hybridmaterial-Pulver nimmt der geringe Bewuchs weiter ab.

**Figur 7** zeigt ein erfindungsgemäß beschichtetes antimikrobielles Hybridmaterial, das durch starkes Rühren im Wasser gleichmäßig verteil ist. Die Partikel des Hybridmaterials in (a) sind ohne Nachbeschichtung, die Partikel des Hybridmaterials in (b) nachträglich in einer Dopamin-Hydrochloridlösung (2 mg/ml) und einem Phosphatpuffer (0,1M, pH 8,5) bei RT behandelt. Durch die Dopamin-Hydrochlorid-Behandlung wurde die Partikeloberfläche von dem zuvor hydrophoben Zustand in einen hydrophilen überführt. Das führte dazu, dass die ohne Nachbeschichtung mit Dopamin-Hydrochlorid hydrophoben Partikel nach dem Rühren sofort auf den Boden des Gefäßes sinken, während durch die hydrophilierten Partikel über längere Zeit eine stabile Dispersion aufrechterhalten werden kann (**Figur 7** **b**).

**Figur 8** zeigt ein erfindungsgemäß hergestelltes antimikrobielles Hybridmaterial auf Cellulose-Basis, dessen antimikrobielle Wirksamkeit durch eine Nachbehandlung nicht in der mikrobiellen Wirksamkeit beeinträchtigt wird. **Figur 8** **a** zeigt anhand des ausgeprägten Hemmhofes auf dem Agar die antimikrobielle Wirkung der erfindungsgemäß hergestellten hybriden Partikel auf Cellulose-Basis ohne Nachbehandlung gegen eine *E*. *coli* (DSM 498) Suspensionskultur (10exp7/ml mit 200 µl ausplattiert). In **Figur 8** **b** zeigt der gleichgroße Hemmhof, dass die mit Ascorbinsäure nachbehandelten Cellulose basierten hybriden Partikel die antimikrobielle Wirkung der erfindungsgemäß hergestellten Partikel nicht negativ verändern. Gleiches gilt für die Nachbehandlungen mit Chitosan (**Figur 8** **c**) und Polydopamin (**Figur 8** **d**).

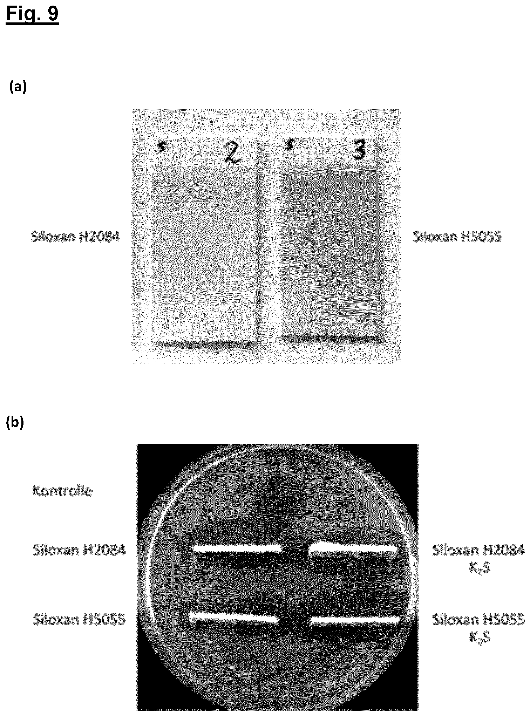

**Figur 9** zeigt ein Cellulose-basiertes antimikrobielles Hybridmaterial, das in Sol-Gel-Beschichtungswerkstoffe (z. B. Siloxane) integriert wurde und die Sol-Gel-Beschichtung mit antimikrobieller Wirksamkeit ausrüstet. Als Sol-Gel Beschichtungen wurden die beiden Siloxan-Coatings H 2084 und H 5055 (**Figur 9** **a**) verwendet. Als antimikrobieller Zusatz wurden hybride Cellulose basierten Partikel verwendet, die in einer Konzentration von 5 Gew.-% dem Siloxan-Coating beigemengt wurden. Nach dem Durchmischen wurde die Dispersion durch Sprühen auf den Probenträger aufgebracht. Anschließend erfolgte im Trockenschrank die Vernetzung der Beschichtung bei der entsprechenden Temperatur. Die Pulverpartikel zeigten hierbei eine gute Verteilung an der Probenoberfläche. In **Figur 9** **b** sind antimikrobielle Untersuchungsergebnisse für *E. coli* auf dem Agar von einseitig Siloxan-beschichteten Polypropylen-Plättchen zu sehen, die mit 5 Gew.-% des erfindungsgemäßen Cellulose-basierten hybriden antimikrobiellen Hybridmaterials versehen waren. Der Hemmhofversuch mit E. *coli* (DSM 498) zeigt die hohe antimikrobielle Aktivität der beiden Proben. Dies gilt auch für Proben, die nachträglich für 5 min. in einer 1 %-igen Lösung von Kaliumsulfid inkubiert worden waren. Der teilweise unregelmäßige Hemmhof ist auf den ungleichmäßigen Sprühauftrag zurückzuführen. Es zeigt sich, dass die antimikrobielle Aktivität der erfindungsgemäß erzeugten antimikrobiellen Partikel von dem Siloxan-Coating kaum beeinträchtigt wird. Die nachträgliche Sulphid-Nachbehandlung führt in diesem Fall sogar zu einer Steigerung der antimikrobiellen Wirksamkeit des Dispersions-Coating-Systems. Da Siloxan-Schichten im auspolymerisierten Zustand hart und kratzfest sind, eignet sich dieses antimikrobielle Dispersions-Coating-System besonders für Oberflächen, die verschleißmäßig belastet werden.

## Patentansprüche

1. Hybridmaterial, das insbesondere als Additiv in Verbindung mit Materialien, Werkstoffen und/oder Beschichtungsmaterialien zur Erzeugung einer antimikrobiellen, antiviralen und/oder fungiziden Wirkung vorgesehen ist, und das Partikel umfasst, die jeweils mindestens zwei unterschiedliche Metalle umfassen, wobei zumindest ein erstes Metall und ein zweites Metall zumindest mit ihren jeweiligen Oberflächen miteinander in elektrisch leitendem Kontakt stehen, und wobei das erste Metall mindestens eine halbleitende Verbindung mindestens eines Übergangsmetallelements umfasst, das über mehrere Oxidationsstufen verfügt und über katalytisch aktive Zentren einen Wechsel der Oxidationsstufen erlaubt, und das zweite Metall mindestens einen elektrisch leitfähigen Silberhalbleiter umfasst, wobei die beiden Metalle Halbelemente bilden, die in Gegenwart von Wasser und Sauerstoff kurzgeschlossen sind und dadurch eine antimikrobielle, antivirale und/oder fungizide Wirkung entfalten, **dadurch gekennzeichnet, dass** die Partikel jeweils mindestens ein Trägermaterial umfassen, das zumindest teilweise mit den beiden unterschiedlichen Metallen beschichtet ist, wobei das Trägermaterial Cellulose umfasst und mindestens ein Übergangsmetallelement Ruthenium ist.

2. Hybridmaterial nach Anspruch 1, **dadurch gekennzeichnet, dass** das Trägermaterial zusätzlich mindestens ein Material umfasst, das aus der Gruppe bestehend aus Glas, Zeolith, Silikat, Metall oder einer Metalllegierung, Metalloxid, Keramik, Graphit und einem Polymer ausgewählt ist.

3. Hybridmaterial nach Anspruch 1 oder 2, **dadurch gekennzeichnet, dass** dieses mit organischen Polymeren, vorzugsweise Polyethylenglycol, Polydopamin und/oder Chitosan, und/oder mit Ascorbinsäure oder Ascorbinsäurederivaten modifiziert ist.

4. Hybridmaterial nach einem der Ansprüche 1 bis 3, **dadurch gekennzeichnet, dass** die Stärke der antimikrobiellen Wirkung durch ein Einstellen der Menge mindestens eines der beiden Metalle und/oder der Flächenanteile der beiden Metalle auf der Partikeloberfläche gezielt einstellbar ist.

5. Hybridmaterial nach einem der Ansprüche 1 bis 4, **dadurch gekennzeichnet, dass** mindestens ein weiteres Übergangsmetallelement mindestens ein Metall aus der Gruppe bestehend aus Iridium, Vanadium, Mangan, Nickel, Eisen, Cobalt, Cer, Molybdän und Wolfram ist.

6. Hybridmaterial nach einem der Ansprüche 1 bis 5, **dadurch gekennzeichnet, dass** das Ruthenium in einer oder beiden der Oxidationsstufen VI und IV vorliegt.

7. Hybridmaterial nach einem der Ansprüche 1 bis 6, **dadurch gekennzeichnet, dass** die Übergangsmetallverbindung des ersten Metalls mindestens ein Metalloxid, Metalloxyhydrat, Metallhydroxid, Metalloxyhydroxid, Metallhalogenid und/oder mindestens ein Metallsulfid des Übergangsmetallelements umfasst.

8. Hybridmaterial nach einem der Ansprüche 1 bis 7, **dadurch gekennzeichnet, dass** der Silberhalbleiter mindestens ein Silberoxid, Silberhydroxid, Silberhalogenid oder Silbersulfid, oder eine Kombination von Silber und einer entsprechenden Silberverbindung, umfasst.

9. Hybridmaterial nach einem der Ansprüche 1 bis 8, **dadurch gekennzeichnet, dass** die Partikel sphärisch oder polyedrisch ausgebildet sind und einen mittleren Durchmesser von höchstens 100 µm, vorzugsweise höchstens 50 µm, insbesondere höchstens 5 µm, aufweisen, und/oder dass die Partikel faserförmig ausgebildet sind und eine mittlere Länge von höchstens 1 mm, vorzugsweise höchstens 100 µm, insbesondere höchstens 75 µm oder höchstens 60 µm, aufweisen.

## Claims

1. Hybrid material, in particular intended as an additive in conjunction with materials, substances and/or coating materials for producing an antimicrobial, antiviral and/or fungicidal effect, which comprises particles which each comprise at least two different metals, at least a first metal and a second metal being in electrically conductive contact with one another at least with their respective surfaces, wherein the first metal comprises at least one semiconducting compound of at least one transition metal element having a plurality of oxidation states and allowing a change of oxidation states via catalytically active centers, and the second metal comprises at least one electrically conductive silver semiconductor, wherein the two metals form half-elements which are short-circuited in the presence of water and oxygen, thereby providing an antimicrobial, antiviral and/or antifungal effect, **characterized in that** said particles each comprise at least one carrier material being at least partially coated with said two different metals, wherein said carrier material comprises cellulose and at least one transition metal element is ruthenium.

2. Hybrid material according to claim 1, **characterized in that** the carrier material additionally comprises at least one material selected from the group consisting of glass, zeolite, silicate, metal or a metal alloy, metal oxide, ceramic, graphite, and a polymer.

3. Hybrid material according to claim 1 or 2, **characterized in that** this is modified with organic polymers, preferably polyethylene glycol, polydopamine and/or chitosan, and/or with ascorbic acid or derivatives of ascorbic acid.

4. Hybrid material according to any one of claims 1 to 3, **characterized in that** the strength of the antimicrobial effect is selectively adjustable by adjusting the amount of at least one of the two metals and/or the area fractions of the two metals on the particle surface.

5. Hybrid material according to any one of claims 1 to 4, **characterized in that** at least one further transition metal element is at least one metal selected from the group consisting of iridium, vanadium, manganese, nickel, iron, cobalt, cerium, molybdenum and tungsten.

6. Hybrid material according to any one of claims 1 to 5, **characterized in that** the ruthenium is present in one or both of oxidation states VI and IV.

7. Hybrid material according to any one of claims 1 to 6, **characterized in that** the transition metal compound of the first metal comprises at least one metal oxide, metal oxyhydrate, metal hydroxide, metal oxyhydroxide, metal halide, and/or at least one metal sulfide of the transition metal element.

8. Hybrid material according to any one of claims 1 to 7, **characterized in that** the silver semiconductor comprises at least one of silver oxide, silver hydroxide, silver halide or silver sulfide, or a combination of silver and a corresponding silver compound.

9. Hybrid material according to any one of claims 1 to 8, **characterized in that** the particles are spherical or polyhedral and have a mean diameter of at most 100 µm, preferably at most 50 µm, in particular at most 5 µm, and/or in that the particles are fibrous and have a mean length of at most 1 mm, preferably at most 100 µm, in particular at most 75 µm or at most 60 µm.

## Revendications

1. Matériau hybride, qui est prévu en particulier comme additif en combinaison avec des matériaux, des substance et/ou des matières de revêtement pour produire un effet antimicrobien, antiviral et/ou fongicide, et qui comprend des particules qui comprennent chacune au moins deux métaux différents, au moins un premier métal et un deuxième métal étant en contact électriquement conducteur l'un avec l'autre au moins par leurs surfaces respectives, et le premier métal comprenant au moins un composé semi-conducteur d'au moins un élément métallique de transition, qui dispose de plusieurs degrés d'oxydation et permet un changement des degrés d'oxydation par l'intermédiaire de centres catalytiquement actifs, et le deuxième métal comprend au moins un semi-conducteur d'argent électriquement conducteur, les deux métaux formant des demi-éléments qui sont court-circuités en présence d'eau et d'oxygène et présentent ainsi une activité antimicrobienne, antiviral et/ou fongicide, **caractérisé en ce que** les particules comprennent chacune au moins un matériau porteur qui est au moins partiellement revêtu des deux métaux différents, le matériau porteur comprenant de la cellulose et au moins un élément de métal de transition étant du ruthénium.

2. Matériau hybride selon la revendication 1, **caractérisé en ce que** le matériau porteur comprend en outre au moins un matériau choisi dans le groupe constitué par le verre, la zéolithe, le silicate, le métal ou un alliage de métaux, l'oxyde métallique, la céramique, le graphite et un polymère.

3. Matériau hybride selon la revendication 1 ou 2, **caractérisé en ce qu'**il est modifié avec des polymères organiques, de préférence du polyéthylèneglycol, de la polydopamine et/ou du chitosan, et/ou avec de l'acide ascorbique ou des dérivés de l'acide ascorbique.

4. Matériau hybride selon quelconque des revendications 1 à 3, **caractérisé en ce que** l'intensité de l'effet antimicrobien peut être réglée de manière ciblée par un ajustement de la quantité d'au moins l'un des deux métaux et/ou des proportions de surface des deux métaux sur la surface des particules.

5. Matériau hybride selon quelconque des revendications 1 à 4, **caractérisé en ce qu'**au moins un autre élément de métal de transition est au moins un métal choisi dans le groupe constitué par l'iridium, le vanadium, le manganèse, le nickel, le fer, le cobalt, le cérium, le molybdène et le tungstène.

6. Matériau hybride selon l'une quelconque des revendications 1 à 5, **caractérisé en ce que** le ruthénium est présent dans l'un des états d'oxydation VI et IV ou dans les deux.

7. Matériau hybride selon quelconque des revendications 1 à 6, **caractérisé en ce que** le composé de métal de transition du premier métal comprend au moins un oxyde métallique, un oxyhydrate métallique, un hydroxyde métallique, un oxyhydroxyde métallique, un halogénure métallique et/ou au moins un sulfure métallique de l'élément de métal de transition.

8. Matériau hybride selon quelconque des revendications 1 à 7, **caractérisé en ce que** le semi-conducteur d'argent comprend au moins un oxyde d'argent, un hydroxyde d'argent, un halogénure d'argent ou un sulfure d'argent, ou une combinaison d'argent et d'un composé d'argent correspondant.

9. Matériau hybride selon quelconque des revendications 1 à 8, **caractérisé en ce que** les particules sont de forme sphérique ou polyédrique et présentent un diamètre moyen d'au plus 100 µm, de préférence d'au plus 50 µm, en particulier d'au plus 5 µm, et/ou **en ce que** les particules sont de forme fibreuse et présentent une longueur moyenne d'au plus 1 mm, de préférence d'au plus 100 µm, en particulier d'au plus 75 µm ou d'au plus 60 µm.
